(19) Europäisches Patentamt
European Patent Office
Office européen des brevets

(11) EP 0 718 348 A1

(12) **EUROPÄISCHE PATENTANMELDUNG**

(43) Veröffentlichungstag: **26.06.1996 Patentblatt 1996/26**

(51) Int. Cl.$^6$: **C08J 7/04**

(21) Anmeldenummer: **95119459.6**

(22) Anmeldetag: **11.12.1995**

(84) Benannte Vertragsstaaten: **BE CH DE ES FR GB IT LI NL**

(30) Priorität: **23.12.1994 DE 4446333**

(71) Anmelder: **BAYER AG**
**51368 Leverkusen (DE)**

(72) Erfinder: **Bier, Peter, Dr.**
**D-47800 Krefeld (DE)**

(54) **Verfahren zur kontinuierlichen Kratzfestausrüstung von Polycarbonaten**

(57) Verfahren zur Beschichtung von Polycarbonatformteilen, dadurch gekennzeichnet, daß man auf die Oberfläche eines Formkörpers aus einem Polycarbonat auf Basis eines Diphenols der Formel (Ia)

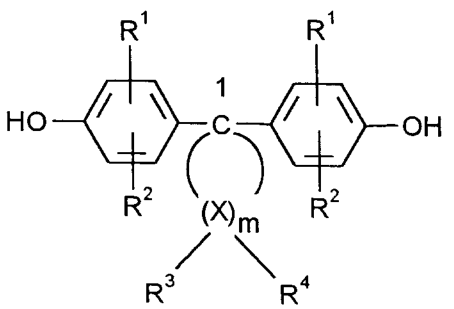

(Ia),

worin

R¹ und R² unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m 4 oder 5,

R³ und R⁴ für jedes X individuell wählbar, unabhängig voneinander Wasserstoff oder $C_1$-$C_6$-Alkyl und

X Kohlenstoff bedeuten,

mit der Maßgabe, daß an mindestens einem Atom X R³ und R⁴ gleichzeitig Alkyl bedeuten,

Silikonlacke mit einer Viskosität von 5 bis 10 000 mPa.s in Schichtdicken von 2 bis 200 µm aufträgt und anschließend bei Temperaturen oberhalb 145°C, vorzugsweise oberhalb 185°C, insbesondere oberhalb 190°C und Zeiten unter 20 min, vorzugsweise unter 10 min und insbesondere unter 6 min in üblichen Vorrichtungen aushärtet.



Printed by Rank Xerox (UK) Business Services
2.12.4/3.4

**Beschreibung**

Thermoplastisch verarbeitbare Polycarbonatwerkstoffe zeichnen sich durch Transparenz, hohe Schlagzähigkeit, hohe Wärmeformbeständigkeit und Dimensionsstabilität aus. Für eine Reihe von Anwendungen ist jedoch ihre Kratzempfindlichkeit prohibitiv. Um Polycarbonat auch für derartige Anwendungen einzusetzen, müssen die Formteile vorher mit einer Kratzfestschicht versehen werden. Obwohl vor allem in den letzten Jahren Kratzfestbeschichtungen und Beschichtungsverfahren entwickelt wurden, die die Kratzfestempfindlichkeit von Polycarbonat wesentlich reduzierten ist immer noch Raum für Verbesserungen: wie noch höhere Kratzbeständigkeit, noch bessere Haftung auf dem Substrat, noch kürzere Aushärtungszeiten. Die höchsten Kratzfestigkeiten werden mit silikonhaltigen Lacksystemen erreicht. Die Aushärtung dieser Lacke erfolgt in der Regel thermisch. Im Falle einer Kratzfestbeschichtung von Bisphenol A-Polycarbonat liegen die Aushärtungszeiten in der Größenordnung von 30 bis 60 Minuten bei der maximal zulässigen Temperatur von 130°C. Bei kürzeren Aushärtungszeiten sind die Lackschichten nicht vollständig ausgehärtet und weich. Werden die Polycarbonatformteile bei höheren Temperaturen als 130°C lackiert, so verwerfen sie sich. Aufgrund der langsamen Aushärtungszeiten der Silikonlacke wird die Aushärtung batchweise in Thermoöfen durchgeführt. Eine kontinuierliche Lackierung in herkömmlichen Lackierstraßen ist nicht möglich.

Ziel der vorliegenden Erfindung ist daher ein Verfahren zur Beschichtung von Polycarbonat-Kunststoffteilen mit Silikonlacken, wobei die resultierende Beschichtung eine sehr hohe Kratzbeständigkeit und gute Haftung aufweist bei gegenüber dem Stand der Technik wesentlich kürzeren Aushärtungszeiten.

Die obige Aufgabe wird erfindungsgemäß durch ein Verfahren zur Beschichtung von Polycarbonatformteilen gelöst, das dadurch gekennzeichnet ist, daß man

a) als Polycarbonate (A) solche auf Basis der Diphenole (I) einsetzt

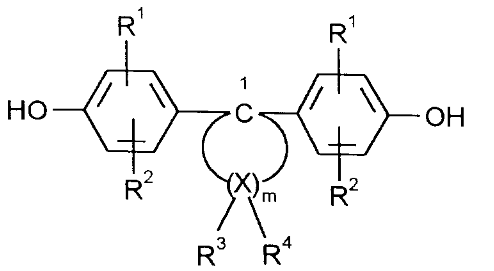

(I)

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl, |
| m | 4 oder 5, |
| $R^3$ und $R^4$ | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X $R^3$ und $R^4$ gleichzeitig Alkyl bedeuten,

b) Silikonlack (B) mit einer Viskosität von 5 bis 10 000 mPa.s in einer Dicke von 2 µm bis 200 µm auf die Polycarbonatformteile aufträgt, und

c) den Lack bei Temperaturen oberhalb 145°C, vorzugsweise oberhalb 185°C, insbesondere oberhalb 190°C, innerhalb von 10 min, vorzugsweise unter 6 min, aushärtet.

Die Polycarbonate A sind hochmolekulare thermoplastische aromatische Polycarbonate mit Molekulargewichten $\overline{M}w$ (Gewichtsmittel) von mindestens 10 000, vorzugsweise von 20 000 bis 300 000, die bifunktionelle Carbonatstruktureinheiten der Formel (Ia) enthalten

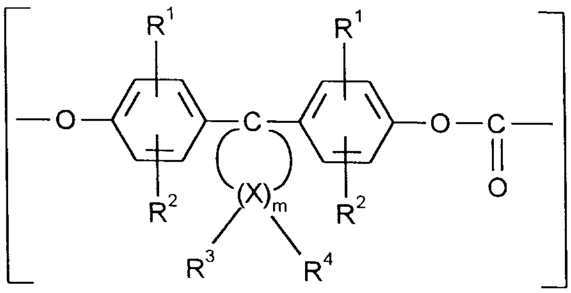

(Ia),

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl, |
| m | 4 oder 5, |
| $R^3$ und $R^4$ | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X $R^3$ und $R^4$ gleichzeitig Alkyl bedeuten.

Diese Polycarbonate und die zugrundeliegenden Dihydroxydiphenylcycloalkane der Formel (Ia) und die Herstellung beider Produkte sind in der EP 395 953 ausführlich beschrieben. Ausgangsprodukte für die Polycarbonate A sind die Dihydroxydiphenylcycloalkane der Formel (Ia). In dieser Formel ist der bevorzugte Alkylrest Methyl; die X-Atome in α-Stellung zu dem Diphenyl-substituierten C-Atom (C-1) sind bevorzugt nicht dialkylsubstituiert, dagegen ist die Alkyldisubstitution in β-Stellung zu C-1 bevorzugt.

Bevorzugt sind Dihydroxydiphenylcycloalkane mit 5- und 6-Ring-C-Atomen im cycloaliphatischen Rest (m = 4 oder 5 in Formel Ia), beispielsweise die Diphenole der Formeln (Ib) bis (Id).

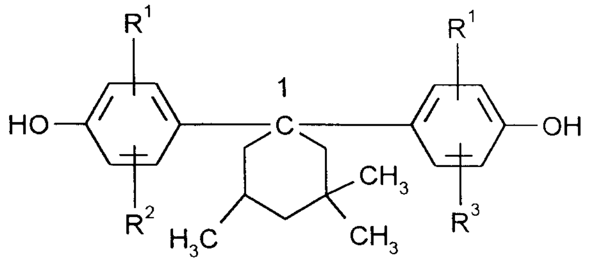

(Ib),

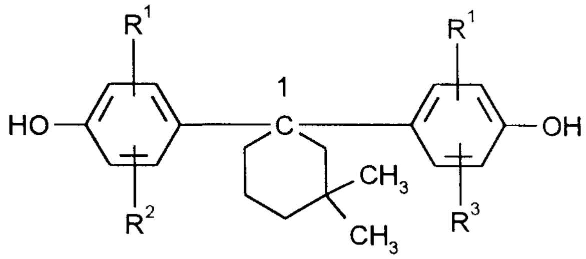

(Ic),

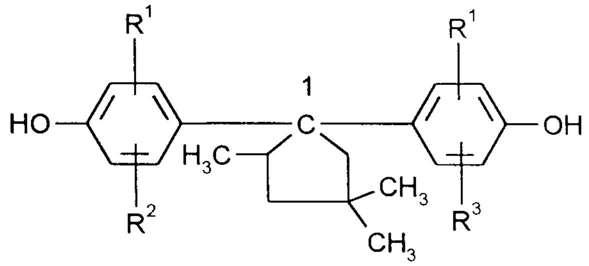

(Id),

wobei das 1,1-Bis-(4-hydroxyphenyl)-3,3,5-trimethylcyclohexan (Formel Ib mit $R^1$ und $R^2$ gleich H) besonders bevorzugt ist.

Es können sowohl ein Diphenol der Formel (Ia) unter Bildung von Homopolycarbonaten als auch mehrere Diphenole der Formel (Ia) unter Bildung von Copolycarbonaten verwendet werden.

Außerdem können die Diphenole der Formel (Ia) auch im Gemisch mit anderen Diphenolen, beispielsweise mit denen der Formel (Ie)

HO-Z-OH (Ie),

zur Herstellung von hochmolekularen, thermoplastischen, aromatischen Polycarbonaten verwendet werden.

Geeignete andere Diphenole der Formel (Ie) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann.

Besonders bevorzugte Diphenole der Formel (Ie) sind beispielsweise:
2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan. Sie können sowohl einzeln als auch im Gemisch eingesetzt werden.

Das molare Verhaltnis von Diphenolen der Formel (Ia) zu den gegebenenfalls mitzuverwendenden anderen Diphenolen der Formel (Ie), soll zwischen 100 Mol-% (Ia) zu 0 Mol-% (Ie) und 2 Mol-% (Ia) zu 98 Mol-% (Ie), vorzugsweise zwischen 100 Mol-% (Ia) zu 0 Mol-% (Ie) und 5 Mol-% (Ia) zu 95 Mol-% (Ie) und insbesondere zwischen 100 Mol-% (Ia) zu 0 Mol-% (Ie) und 10 Mol-% (Ia) zu 90 Mol-% (Ie) und ganz besonders bevorzugt 100 Mol-% (Ia) zu 0 Mol-% (Ie) und 20 Mol-% (Ia) zu 80 Mol-% (Ie) liegen.

Die hochmolekularen Polycarbonate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein.

Die Polycarbonate können in an sich bekannter Weise verzweigt sein durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind:
Phloroglucin, 4,6-Dimethyl-2,4,6-tri-(4-hydroxyphenyl)-hepten-2,4,6-Dimethyl-2,4,6-tri-(4-hydroxyphenyl)-heptan, 1,3,5-Tri-(4-hydroxyphenyl)-benzol, 1,1,1-Tri(4-hydroxyphenyl)-ethan, Tri-(4-hydroxyphenyl)-phenylmethan, 2,2-Bis[4,4-bis-(4-hydroxyphenyl)-cyclohexyl]-propan, 2,4-Bis-(4-hydroxyphenyl-isopropyl)-phenol, 2,6-Bis-(2-hydroxy-5-methylbenzyl)-4-methylphenol, 2-(4-hydroxyphenyl)-2-(2,4-dihydroxylphenyl)-propan,Hexa-[4-hydroxyphenyl-isopropyl)-phenyl]-orthotere phthalsäureester, Tetra-(4-hydroxyphenyl)-methan, Tetra-[4-(4-hydroxyphenyl-isopropyl)-phenoxy]-methan und 1,4-Bis-[4',4'-dihydroxxytriphenyl)-methyl]-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate A dienen monofunktionelle Verbindungen in üblichen Konzentraten. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (If) geeignet

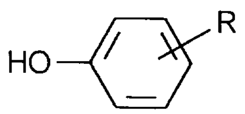
(If),

worin

R einen verzweigten $C_8$- und/oder $C_9$-Alkylrest darstellt.

Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Für nähere Einzelheiten sei auf EP 395 953 verwiesen.

Die Polycarbonate A können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.

Durch den Einbau der Diphenole der Formel (Ia) besitzen die Polycarbonate hohe Wärmeformbeständigkeit.

Die besonders bevorzugten Polycarbonate A sind solche, die Einheiten der Formel (Ig) enthalten

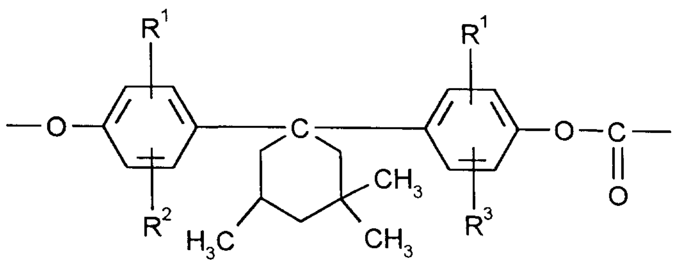
(Ig),

worin $R^1$ und $R^2$ die für Formel (I) genannte Bedeutung haben, besonders bevorzugt aber Wasserstoff sind.

Die Polycarbonate besitzen außer hoher Wärmeformbeständigkeit eine gute UV-Stabilität und ein gutes Fließverhalten in der Schmelze.

Durch die beliebige Kombination mit anderen Diphenolen, insbesondere mit denen der Formel (Ie) lassen sich zudem die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 5 Mol-% und

insbesonder in Mengen von 100 Mol-% bis 10 Mol-% und ganz besonders von 100 Mol-% bis 20 Mol-%, bezogen auf die Gesamtmenge von 100 Mol-% an Diphenoleinheiten, in Polycarbonaten enthalten.

Die Silikonlacke (B) sind im wesentlichen thermisch aushärtende Lacke, die vorzugsweise durch Kondensationsreaktion zu -Si-O-Si-Verknüpfungen vernetzen. Parallel dazu können auch andere Vernetzungsmechanismen ablaufen. Derartige Lacksysteme sind z.B. beschrieben in den US-Patenten 3 790 527, 3 865 755, 3 887 514, 4 243 720, 4 278 804, 4 680 232, 4 006 271, 4 476 281, in den DE-AS 4 011 045, 4 122 743, 4 020 316, 3 917 535, 3 706 714, 3 407 087, 3 836 815, 2 914 427, 3 135 241, 3 134 777, 3 100 532, 3 151 350, in den DOS 3 005 541, 3 014 411, 2 834 606, 2 947 879, 3 016 021.

Die Lacke können durch die bekannten Verfahren wie Sprühen, Tauchen, Rakeln, Fallfilmauftrag, Spincoating usw. oder durch Kombinationen aufgebracht werden. Die Aushärtung der Lacke erfolgt erfindungsgemäß bei Temperaturen oberhalb 135°C, vorzugsweise oberhalb 150°C, insbesondere 180°C. Die Aushärtzeit sollte bei diesen Temperaturen 20 min, vorzugsweise 10 min und insbesondere unter 6 min betragen. Die Lackschicht sollte nach dem Aushärten 0,5 bis 100 µm, vorzugsweise 1 bis 20 µm, insbesondere 2 bis 10 µm betragen. Es ist auch eine Mehrfachlackierung möglich, wobei vorzugsweise bei den einzelnen vorhergehenden Schritten eine vollständige Aushärtung nicht durchgeführt werden sollte, um Risse und Ablösungen zu vermeiden. Zur besseren Haftung der silikonhaltigen Lacke auf dem Kunststoffsubstrat kann eine Vorlackierung mit sogenannten Primern, wie sie ebenfalls in den o.g. Patenten beschrieben sind, durchgeführt werden.

Als Beispiel für einen Polysilikonlack werden Beschichtungskompositionen gemäß DE-OS 2 914 427 verwendet. Die Beschichtungsmassen bestehen aus:

A) 10 bis 40 Gew.-%, bezogen auf das Gesamtgewicht der Beschichtungsmasse, einer teilweise hydrolysierten Siloxanverbindung, die durch Hydrolyse in Wasser bei etwa 50 bis 80°C während einer Zeit von etwa 1 bis 12 Stunden mindestens einer der folgenden Verbindungen erhalten wird:

(a) eines Kohlenwasserstofftrialkoxysilans der Formel $R'Si(OR'')_3$, worin R' eine Alkylgruppe mit 1 bis 4 Kohlenstoffatomen, eine Phenyl- oder Vinylgruppe und R'' eine Alkylgruppe mit 1 bis 4 Kohlenstoffatomen bedeuten,

und/oder

(b) Co-Kondensationsprodukten von (a) und 1 bis 40 Gew.-% eines Phenyl oder Vinyltrialkoxysilans, worin die Alkoxygruppe 1 bis 4 Kohlenstoffatome enthält,

und/oder

(c) Co-Kondensationsprodukten von 1 Mol von (a) und 0,05 bis 1 Mol Tetraalkoxysilan, worin die Alkoxygruppe 1 bis 4 Kohlenstoffatome enthält,

und/oder

(d) Co-Kondensationsprodukten von 1 Mol von (a) und 0,05 bis 1 Mol Dialkyldialkoxysilan, worin die Alkyl- und Alkoxygruppen 1 bis 4 Kohlenstoffatome enthalten,

B) 0 bis 40 Gew.-%, bezogen auf das Gesamtgewicht der Beschichtungsmasse, einer wäßrigen Dispersion von kolloidalem Siliziumdioxid,

C) 0 bis 5 Gew.-%, bezogen auf das Gesamtgewicht des Überzugsmittels, eines veretherten Methylolmelamins,

D) 0,5 bis 30 Gew.-%, bezogen auf das Gesamtgewicht der Beschichtungsmasse, Essigsaure sowie

E) ein inertes organisches Lösungsmittel, dadurch gekennzeichnet, daß die Beschichtungsmasse zusätzlich 0,05 bis 15 Gew.-%, bezogen auf das Gesamtgewicht der Beschichtungsmasse, eines blockierten Polyisocyanates enthält.

Die Kohlenwasserstoff-Trialkoxysilane (1) sind funktionelle Siloxanverbindungen der Formel $R'Si(RO'')_3$, worin R' eine Alkylgruppe mit 1 bis 4 Kohlenstoffatomen, eine Phenyl-, oder eine Vinylgruppe bedeutet und R'' eine Alkylgruppe mit 1 bis 4 Kohlenstoffatomen bedeutet. Methyltriethoxysilan ist bevorzugt. Ein Teilhydrolysat von Kohlenwasserstofftrialkoxysilanen wird erhalten, indem man Wasser zu Kohlenwasserstofftrialkoxysilanen bringt und das entstehende Material bei einer Temperatur von 50 bis 80°C während 1 bis 10 Stunden erwärmt. Die Herstellung solcher Teilhydrolysate

ist an sich bekannt und beispielsweise in der US-Patentschrift 3 451 838, DE-OS 1 923 290 und in der US-PS 4 006 271 beschrieben.

Ein teilweise hydrolysiertes Co-Kondensationsprodukt, das im wesentlichen 1 Mol des Kohlenwasserstofftrialkoxysilans als Hauptkomponente und 0,05 bis 1 Mol Tetraalkoxy-($C_1$ bis $C_4$)-Silan als zusätzliche Komponente enthält, bildet einen Überzug mit verbesserter Härte.

Ein teilweise hydrolysiertes Co-Kondensationsprodukt aus 1 Mol Kohlenwasserstofftrialkoxysilan und 0,05 Mol Dialkyl-($C_1$ bis $C_4$)-dialkoxy-($C_1$ bis $C_4$)-silan bildet einen weichen Überzug.

Zusätze von wäßrigen Dispersionen von kolloidalem Siliziumdioxid zum teilweise hydrolysierten (Co)-Kondensationsprodukt aus Alkyltrialkoxysilan und gegebenenfalls Tetraalkoxysilan bilden Überzüge mit verbesserter Härte.

Die gegebenenfalls mitverwendeten veretherten Methylolmelamine sind technische Produkte, die in an sich bekannter Weise hergestellt werden. Spezielle Beispiele für diese Verbindungen sind Hexaalkoxymethylmelamine wie Hexamethoxymethylmelamin, Hexaaethoxymethylmelamin, Hexapropoxymethylmelamin, Hexaisopropoxymethylmelamin, Hexabutoxymethylmelamin und Hexacyclohexyloxymethylmelamin.

Das veretherte Methylolmelamin wird vorzugsweise in einer Menge von 0 bis 150 Gewichtsteilen auf 100 Gewichtsteile (berechnet als $SiO_2$) des partiellen Hydrolyseprodukts der Tetraalkoxysilanverbindung bzw. der kolloidalen Kieselsäure verwendet. Bei Zusatz von mehr als 150 Gewichtsteilen verethertem Methylolmelamin nimmt die Haftfestigkeit und die Härte der Beschichtung ab. Der Zusatz des veretherten Methylolmelamins verleiht der Beschichtung sowohl Härte als auch Biegsamkeit.

Die zugesetzten verkappten Polyisocyanate sind lösungsmittelfreie, gegebenenfalls 2 bis 4 Gew.-% Polyether enthaltende, stabile wäßrige Emulsionen blockierter Isocyanate, bei denen als emulgierende Komponente Salze von Diaminosulfonsäuren verwendet werden. Sie werden hergestellt durch Umsetzung beliebiger, vorzugsweise di- bis tetrafunktioneller Polyisocyanate mit Verbindungen, die gegenüber Isocyanatgruppen reaktionsfähige Molekülgruppierungen aufweisen. Hierfür kommen unter anderem sekundäre oder tertiäre Alkohole, C-H-acide Verbindungen, Oxime, Lactame, Phenole, N-Alkylamide, Imide, Imidazole, Triazole oder Alkalibisulfite in Frage. Vorzugsweise werden C-H-acide Verbindungen, insbesondere aktivierte Methylengruppen enthaltende Verbindungen, wie z.B. Malonsäuredialkylester, Acetessigsäurealkylester oder Acetylaceton eingesetzt.

Die Umsetzung der Polyisocyanatfunktion mit der gegenüber Isocyanatgruppen reaktionsfähigen Molekülgruppierung erfolgt in Gegenwart bestimmter Mengenanteile von aromatischen, aliphatischen oder araliphatischen Diaminsulfonsäuren bzw. derer Alkali- oder Ammoniumsalze.

Die verwendeten blockierten Polyisocyanate sind durch Umsetzung von Polyisocyanaten mit Blockierungsmitteln wie z.B. Malonsäurediethylester oder Acetessigsäureethylester in an sich bekannter Reaktion erhältlich. Die Löslichkeit bzw. Dispergierbarkeit des blockierten Polyisocyanats beruht in der Einbeziehung von hydrophilen Komponenten in die Additionsreaktion, deren ionische oder nichtionische wasserdispergierend wirkende Polyethylenoxid-Segmente beim Aufbau des Polymeren mit eingebaut werden.

Durch den Einbau der ionischen oder nichtionischen hydrophilen Gruppen werden die betreffenden blockierten Polyisocyanate ihrerseits so weit hydrophil, daß sie in Wasser oder in wäßrig-alkoholischen Lösungen oder Zubereitungen löslich oder stabil dispergierbar und verträglich mit den für die Thermoplastbeschichtung geeigneten Zubereitungen sind.

Die Verwendung der oben beschriebenen blockierten Isocyanate führt zu Überzügen mit verbesserter Haftung und Elastizität, ohne die Kratzfestigkeit und Härte des Überzuges nachteilig zu beeinflussen.

Die organischen Lösungsmittel, die zusätzlich zur Essigsäure verwendet werden, sind nicht kritisch. Es kommen hierfür Alkohole, Ketone, Ether und/oder aromatische Kohlenwasserstoffe in Betracht. Zur Herstellung des Überzugsmittels sind von diesen Lösungsmitteln Ethanol und Isopropanol besonders bevorzugt. Die Menge an organischen Lösungsmitteln muß ausreichen, um die teilweise hydrolysierte Verbindung zusammen mit der Essigsäure und den übrigen erwähnten Zusatzmitteln vollständig zu lösen und um die Konzentration an der teilweise hydrolysierten Verbindung auf 5 bis 15 Gew.-%, berechnet als Feststoffe und bezogen auf das Gesamtgewicht des Überzugsmittels, einzustellen.

Um Thermoplaste mit dem Überzugsmittel zu beschichten, kann man irgendwelche Verfahren wie Eintauch-, Sprüh- und Gießverfahren verwenden. Die so beschichteten Thermoplastkörper werden dann erwärmt, um das Überzugsmittel zu härten.

**Beschichtungsmaterial:**

Herstellung der Grundkomponenten:

a) Zu 300 g kolloidaler Kieselsäure mit 30 Gew.-% $SiO_2$-Gehalt werden 19,8 g Eisessig, 210 g destilliertes Wasser und 227 g Isopropanol gegeben. Nach gründlicher Durchmischung werden 900 g Methyltriethoxysilan zugesetzt und die Mischung unter Rühren auf 60°C erwärmt. Man beläßt während 4 Stunden bei dieser Temperatur und fügt

anschließend weitere 1200 g Isopropanol zur Mischung hinzu. Nach Abkühlen des Produktes auf Raumtemperatur wird die schwach opake Lösung filtriert.

b) In einem mit Rührer und Rückflußkühler versehenen Gefäß werden 340 g Isopropanol, 190 g Tetraethoxysilan und 360 g Methyltriethoxysilan vorgelegt. Dieses Gemisch wird mit 180 g 0,05 n Salzsäure versetzt und zu Durchführung der Cohydrolyse fünf Stunden unter Rückfluß erwärmt. Nach der Umsetzung wird das Gemisch auf Raumtemperatur abgekühlt. Man erhält eine Lösung, die ein Teilhydrolysat von Tetraethoxysilan (5,1 %, berechnet als $SiO_2$) und Teilhydrolysat von Methyltriethoxysilan (12,6 %, berechnet als $CH_3SiO_{1,3}$) enhält.

Vor Verwendung als Beschichtungsmittel werden die beiden Komponenten im Verhältnis 1:1 miteinander vermischt und in einer Mischung aus 60 Gewichtsteilen n-Butanol, 40 Gew.-Teilen Essigsäure und 20 Gew.-Teilen Toluol gelöst und 1,5 Gew.-Teile des folgenden Isocyanats (1) hinzugegeben.

**Herstellung des blockierten Isocyanats (1)**

370 g Malonsäurediethylester werden bei Raumtemperatur mit 2,7 g Natriumphenolat 15 Minuten verrührt. Man setzt 500 g eines biuretisierten Hexamethylendiisocyanats (23,8 % NCO-Gruppen) zu und rührt nach Abklingen der exothermen Reaktion 3 Stunden bei 90°C nach. Sodann werden 40 g eines auf n-Butanol gestarteten Ethylenoxid-Polyethers (MG = 2000) und 1 ml Zinn-(II)-octoat zugegeben und weitere 3 Stunden bei 90°C gerührt. Unter Erhöhung der Rührerumdrehungszahl setzt man nun eine Lösung von 46 g Natrium-2,4-diaminobenzolsulfonat in 150 ml Wasser zu und rührt 2 Stunden bei 60°C. Dann werden 200 ml Isopropanol hinzugegeben.
Man erhält eine klare, gelbe, mit Wasser verdünnte Flüssigkeit. Die Lösung enthält ca. 76 Gew.-% Feststoff. Der Gehalt an blockierten NCO-Gruppen beträgt 7,6 %.

Beschichten von Substraten und Prüfung der Eigenschaften der Beschichtungen:

Platten aus einem Copolycarbonat auf Basis des Diphenols Ib und des Bisphenols A (Apec HT KU 1-9350 mit einer Glastemperatur Tg = 185°C der Bayer AG) bzw. zum Vergleich ein Polycarbonat auf Basis Bisphenol A (Makrolon 3108 (Tg = 148°C der Bayer AG) mit den Maßen 105 x 150 x 3 mm wurden mit Isopropanol gereinigt und durch Tauchen in das obengenannte Beschichtungsmaterial bei einer Tauchgeschwindigkeit v = 100 mm $min^{-1}$ mit einer Lackschicht von 20 µm beschichtet. Nach 10 min Ablüften bei Raumtemperatur wurden die beschichteten Platten bei erhöhten Temperaturen getrocknet. Dabei wurden Trocknungszeit und Trocknungstemperatur variiert. Die Schichtdicke des Kratzfestlackes betrug nach Trocknung 5 µm.

Die beschichteten Platten wurden nach erfolgter Aushärtung 2 Tage bei Raumtemperatur gelagert und sodann folgenden Prüfungen unterworfen. Die Ergebnisse der Prüfungen sind aus Tabelle I ersichtlich.

1. Haftfestigkeit auf dem Trägermaterial

Die auf die Platte aufgebrachte ausgehärtete Schicht wird bis zum Substrat mit einer scharfen Klinge kreuzweise eingekerbt, daß 100 Zellen mit einer Fläche von 1 $mm^2$ gebildet werden. Ein Cellophanklebeband wird dann fest auf die kreuzweise eingeschnittenen Linien aufgeklebt und mit einem 90° Winkel zur aufgetragenen Schicht abgezogen. Das Verfahren wird dreimal wiederholt. Die erhaltenen Haftungswerte werden in fünf Klassen eingeteilt von 0 (keine Entlaminierung) bis 5 (vollständige Entlaminierung) abhängig von der Zahl der zurückbleibenden Zellen (DIN 53 151).

2. Abriebfestigkeit nach Hub-Schubmethode (ASTM F 735)

Die Abriebfestigkeit der mit der Beschichtungsmasse der Erfindung erhaltenen Beschichtung wird durch einen oszillierenden Abrieb-Test nachgewiesen. Dieser Test wird in einer besonderen Vorrichtung durchgeführt, die im wesentlichen aus einer Schüttelplatte in einem Gehäuse besteht, die durch einen Motor hin-und herschwingend mit einer Frequenz von 150 $min^{-1}$ und einem Hub von 10 cm betrieben wird. An dieser Schüttelplatte wird das zu untersuchende beschichtete Substrat befestigt. Mit Hilfe eines Schleifmittels, das sich in Druckkontakt mit der beschichteten Oberfläche befindet, wird bei konstanter Auflagekraft des Schleifmittels die jeweilige Eintrübung der Oberfläche nach 20 Schüben ermittelt.

| Ergebnisse | | | | | | |
|---|---|---|---|---|---|---|
| Plattenmaterial | Härtungsbedingungen | | | Haftung Gitterschnitt/Tesa | | Hub-Schub-Methode |
| | | Temperatur (°C) | Zeit (min) | unbewittert | bewittert 1000 h | Eintrübung n. 20 Zyklen |
| Apec HT KU 1-9350 | Umluft-Ofen | 130 | 30 | 0 | 2 | 0,9 |
| Apec HT KU 1-9350 | Umluft-Ofen | 130 | 5 | 1 | 4 | 1,6 |
| Apec HT KU 1-9350 | Umluft-Ofen | 150 | 30 | 0 | 1 | 0,7 |
| Apec HT KU 1-9350 | Umluft-Ofen | 150 | 5 | 0 | 2 | 1,2 |
| Apec HT KU 1-9350 | Umluft-Ofen | 172 | 30 | 0 | 0 | 0,4 |
| Apec HT KU 1-9350 | Umluft-Ofen | 172 | 5 | 0 | 1 | 0,6 |
| Apec HT KU 1-9350 | Umluft-Ofen | 186 | 30 | 0 | 0 | 0,4 |
| Apec HT KU 1-9350 | Umluft-Ofen | 186 | 5 | 0 | 0 | 0,4 |
| Apec HT KU 1-9350 | Umluft-Ofen | 191 | 5 | 0 | 0 | 0,3 |
| Apec HT KU 1-9350 | IR-Strahler | 191 | 3 | 0 | 0 | 0,4 |
| Apec HT KU 1-9350 | IR-Strahler | 212 | 3 | 0 | 0 | 0,2 |

**Patentansprüche**

1. Verfahren zur Beschichtung von Polycarbonatformteilen, dadurch gekennzeichnet, daß man auf die Oberfläche eines Formkörpers aus einem Polycarbonat auf Basis eines Diphenols der Formel (Ia)

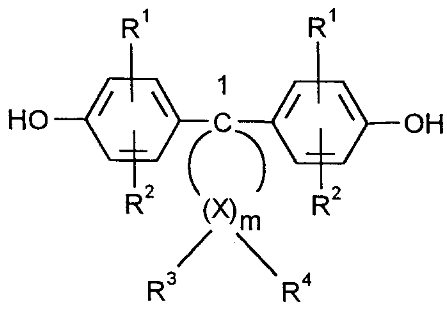

(Ia),

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl, |
| m | 4 oder 5, |
| $R^3$ und $R^4$ | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X $R^3$ und $R^4$ gleichzeitig Alkyl bedeuten,
Silikonlacke mit einer Viskosität von 5 bis 10 000 mPa.s in Schichtdicken von 2 bis 200 µm aufträgt und anschließend bei Temperaturen oberhalb 145°C, vorzugsweise oberhalb 185°C, insbesondere oberhalb 190°C und Zeiten unter 20 min, vorzugsweise unter 10 min und insbesondere unter 6 min in üblichen Vorrichtungen aushärtet.

Europäisches Patentamt

# EUROPÄISCHER RECHERCHENBERICHT

Nummer der Anmeldung
EP 95 11 9459

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 524 524 (BAYER AG)<br>* Ansprüche 1,4 *<br>* Seite 7, Zeile 13-18 *<br>* Seite 7, Zeile 22-31 *<br>--- | 1 | C08J7/04 |
| D,A | EP-A-0 017 187 (BAYER AG)<br>* Ansprüche 1,3 * | 1 | |
| D | & DE-A-29 14 427 (BAYER AG)<br>----- | | |

| RECHERCHIERTE SACHGEBIETE (Int.Cl.6) |
|---|
| C08J |

Der vorliegende Recherchenbericht wurde für alle Patentansprüche erstellt

| Recherchenort | Abschlußdatum der Recherche | Prüfer |
|---|---|---|
| DEN HAAG | 15.März 1996 | Hallemeesch, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)